# EUROPEAN PATENT APPLICATION

(11) **EP 2 704 064 A1**
(43) Date of publication of application: **05.03.2014**
(21) Application number: 11864439.2
(22) Date of filing: 05.05.2011
(51) Int. Cl.: G06K 19/08, B24D 15/10

(54) **TELEMATIC PAYMENT SYSTEM USING A MULTIFUNCTION CARD**

(30) Priority: 28.04.2011 ES 201130458 U
(71) Applicant: Prepaytrans Gestion Empresarial, S.L., 28223 Pozuelo de Alarcon, Madrid (ES)
(72) Inventor: MARTINEZ MARTINEZ, Javier, E-28223 Pozuelo de Alarcón (Madrid) (ES)
(74) Representative: Temino Ceniceros, Ignacio
(86) International application number: PCT/ES2011/070323
(87) International publication number: WO 2012/146794

(57) **Abstract**

Multifunction card which essentially comprises a card body (1), which invisibly integrates first radio-frequency means (2) and visibly integrates second electronic data storage means (3) and third magnetic data storage means (4) in the form of a magnetic stripe, and is characterized in that each of said means is configured to integrate at least one function selected from: transport card; membership card for a particular group; presence control applications; applications as payment means, whether as a credit card, a debit card or a closed payment means; and applications as a money card, a gift card or a combination of the above.

## Description

The object of the present invention is a multifunction card and the telematic payment system using said card, which integrates in a single medium, both integrated and non-visible radio frequency means and a physical circuit and a magnetic stripe, all this in such a way that allows a plurality of uses and combinations thereof, facilitating their use in the telematic payment system. The present invention falls within the field of the technique of credit cards with multiple applications.

### State of the prior art

Different cards preferably for banking use are known, and also have the possibility of multiple uses such as for example cards for use in Internet-type networks, cards only for banking use with magnetic stripe, or those mixed for banking use (credit/debit) with electronic purse, i.e. combining magnetic stripe and electronic circuit. Similarly, the use of cards as means of payment, for example, in restaurants or loyalty cards with direct debit are well known in the state of the art of the present invention.

In the same way, and independently, the use of cards for a multitude of uses outside the strictly banking uses such as for example public transportation cards, membership cards for a particular group (university cards, building-access key cards, etc.), presence or schedule control, among many others, has gained popularity.

A first technical problem object to be solved by the present invention lies in the unification in a single physical support so that it is convenient for the user, centralizing on a single card all mentioned uses.

The closest antecedent is the document WO99/03057, wherein a multifunction card capable of serving as a prepaid phone card, a debit card, a loyalty card, and a medical information card is described. Each card has an identification number comprising a bank identification number which assists in establishing communications links. The system can be accessed from each point-of-sale. The point-of-sale treats the card as a credit or debit card and routes transaction data to a processing hub using the banking system or issuer identification. Said processing hub coordinates the various databases corresponding to the various functions of the card.

The main deficiency having this system lies in the limitation of uses, since a lack of its own RF means prevents its use in certain areas without access databases or online communications as well as in its own applications of tickets and/or presence control, since the information will be prerecorded on said RF elements.

This card, in the same way, depends on the points of sale. In addition, the access of these cards to databases is only through said points, the processing hub and databases, requiring an independence of the cards with regard to the points of sale.

Possible use as gift card also has obvious shortcomings, since it can only act in closed circuit. It is desirable to have a gift card configurable, such as open, closed, FUC card (unique code which in Spain identifies the commerce that made the request for authorizing the purchase, cancellation or refund to a credit card, in other countries there are similar identifiers), card by sector of commercial activity (codes that identify a group of businesses with FUC per sector of activity), time card, etc.

Finally, any known document of the state of the art mentions or suggests the possibility of establishing balance transfers between different functionalities of the card, this fact being fundamental for a correct operation of the multifunction card as a unique payment device (or other services) of the user.

On the other hand, no other bank card which, as a payment means, is entirely made of cardboard, paperboard or paper and having all elements of the cards for standard banking use and an equivalent transaction, is known.

### Explanation of the invention

The multifunction card object of the present invention comprises at least a card body, wherein RFID (radiofrequency) means with a plurality of recorded data are invisibly integrated. In addition, the card includes a classic magnetic stripe and an electronic circuit of those used in wallet-type cards. All these means or elements are configured to define a plurality of uses or utilities, any susceptible to be configured in any of the three available physical means (magnetic stripe, electronic circuit and RFID elements), these utilities being at least, but not limited to: transport cards; membership card for a particular group, such as medical or university card; cards for presence control applications; applications as payment means, either as credit card, a debit card or a closed payment means, such as cards for meals; applications as a money card and gift cards.

As mentioned above, each physical support can be configured for a particular use, without real limitation between combinations, except those arising from certain applications that offer themselves much more to a particular physical support, by principle of compatibility with the systems and current readers, but not by lack of ability of the card of the invention. By way of example, in general the applications of banking type, by external conditions derived from its link with the banking system, will be in the physical support more suitable and usual, the magnetic strips, while the transport card can be configured in the RFID and the access control in a particular facility in the physical chip.

The multifunction card is integrated in a telematic payment system comprising remote access means to the system, verification means of the type of transaction and control means of the balance of each function of the multifunction card of claim 1 based on given rules configurable by the user and/or the system administrator, these rules configuring the balances, limits thereof and/or subdivisions of each of these balances and comprising means of inter-function balance transfer and means of remote recharge of balance in each function of the multifunction card.

The telematic payment system, depending on the type of transaction to be paid with the card, have *n* balances, having each balance depending on the type of transaction, limiting the card consumptions in sales by multiple parameters, such as amount, date, sector, or any other, existing a system monitoring over the card at each point of sale; and where in addition, the card and the system are configured so that each function or support has assigned a certain balance, that in turn is susceptible to be subdivided, each subdivision being in turn susceptible to be transferred.

Optionally, the multifunction card has a virtual representation in the network, i.e. by assigning a virtual card number that is kept in the database, allowing it to operate against the balance on the card defined for such use. This is in direct relation with the functionality of enabling or disabling a bag. A bag is defined as an amount or balance for purchases on the internet and it can be paid through a remote application, SMS, electronic mail, or the like, while is not in use and activate it only when it is to be used, preventing fraud in purchases.

The card object of the invention in its particular embodiment is made of paper, cardboard or other equivalent supports that allow maintaining the characteristics defined by the invention. However, in a second embodiment, the card can be made of a standard plastic material.

Thus, in a particular embodiment, the card is of the type that comprises at least a magnetic stripe or similar means, in the preferred embodiment a low coercivity magnetic stripe, and also includes the number of the card and its expiry date, and is characterized by being entirely formed by a paperboard with a weight between 200 gr/m² and 240 gr/m², the weight of 220 gr/m² being preferred in format of standard credit card (85.60 x 53.98 mm).

In a particular embodiment of the invention, this is designed for a single use, so a significant cost saving in the manufacture and use of the same is possible. Similarly, since it is designed for single use (at the most two), the regularity of the transaction greatly increases since it is possible to print a card with a certain amount for any transaction like a prepaid card. A major advantage of its use is that you can have a kind of card book, so that we never use the bank credit card in places that do not consider safe, using the advantages of the traveler's cheques, but with the advantages of the universality of credit cards.

Throughout the description and claims, the word "comprises" and its variations are not intended to exclude other technical features, additives, components or steps. For those skilled in the art, other objects, advantages and characteristics of the invention will emerge in part from the description and in part from the practice of the invention. The following examples and drawings are provided by way of illustration, and are not intended to be limiting of the present invention. Furthermore, the present invention covers all the possible combinations of particular and preferred embodiments herein indicated.

### Brief description of the drawings

Fig. 1 shows a view of the multifunction card object of the present invention.
Fig. 2 shows an operation diagram of the telematic payment system during the inter-function transfer.
Fig. 3 shows an operation diagram of the telematic payment system in its application with balance recharge.
Fig. 4 shows an operation diagram of the telematic payment system with open networks and closed networks.
Fig. 5 shows an operation diagram of the telematic payment system in multi-balance transactions.
Fig. 6 shows an operation diagram of the telematic system in an example of transaction of the same.

### Detailed description of embodiments and examples.

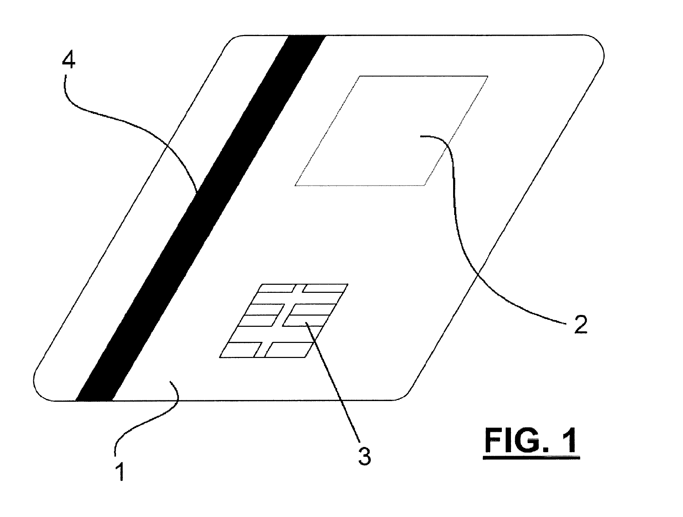

As shown in Fig. 1, the multifunction card object of the present invention essentially comprises a card body (1), which invisibly integrates first radio-frequency means (2) and visibly integrates second electronic data storage means (3) and third magnetic data storage means (4) preferably in the form of a magnetic stripe and characterized in that each of said means is configured to integrate at least one function selected from: transport card; membership card for a particular group; presence control applications; applications as payment means, whether as a credit card, a debit card or a closed payment means; applications as a money card, a gift card or a combination of the above.

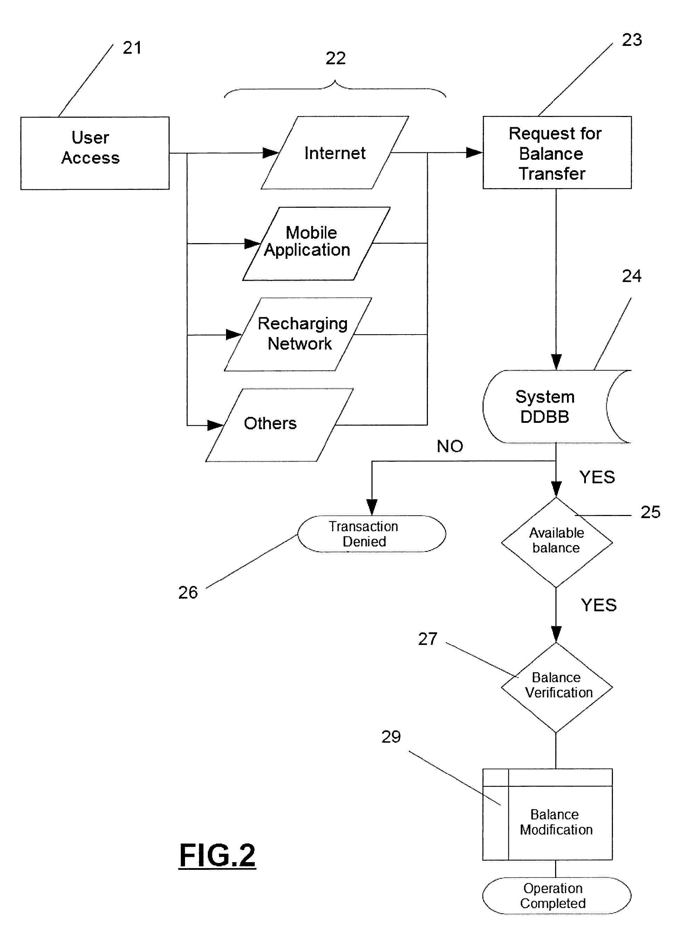

Thus, in a practical embodiment, the radiofrequency means (2) act as a presence control, second electronic means (3) act as a electronic wallet, third magnetic means (4) as a bank card. In normal use, the card acts as a normal credit card, wherein there is also the possibility to transfer balance (card integrated in a telematic payment system) inter-functions, as shown in Fig. 2.

The telematic payment system, as indicated above, allows enabling the user the inter-function balance transfer, thus, the user accesses (21) access means (22) selected from: internet, mobile application, recharging network, or equivalent and requests the inter-function balance transfer (23) to a database of the system (24) wherein the available balance (25) is consulted, denying the transaction if there is not enough balance (26) or approving it and checking the balance to be transferred (27), modifying the internal balances (29) and ending the transaction.

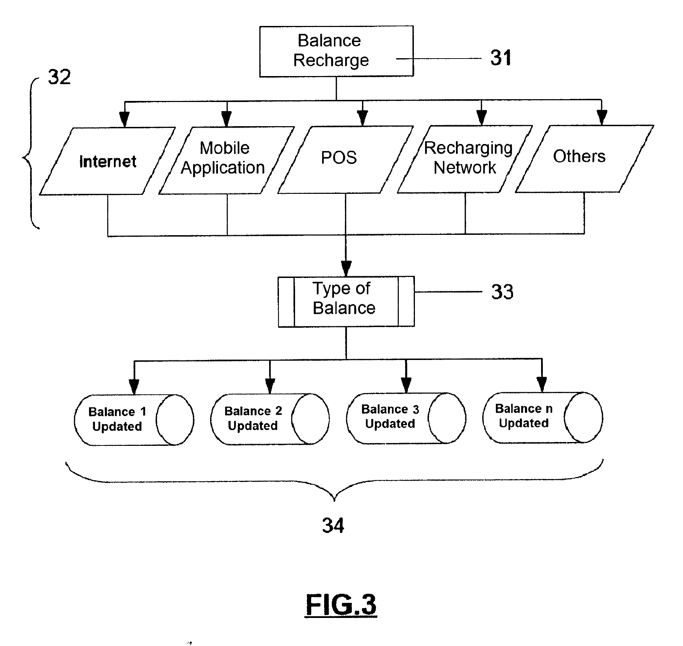

This transaction is different from that of the mere remote balance recharge, described in Fig. 3, wherein the user accesses the balance recharge (31) through an access means to the system (32), that is one selected from: POS, internet, mobile application, recharging network, or equivalent; and wherein the system analyzes what type of balance (33) you want to top up, updating each of the balances (34).

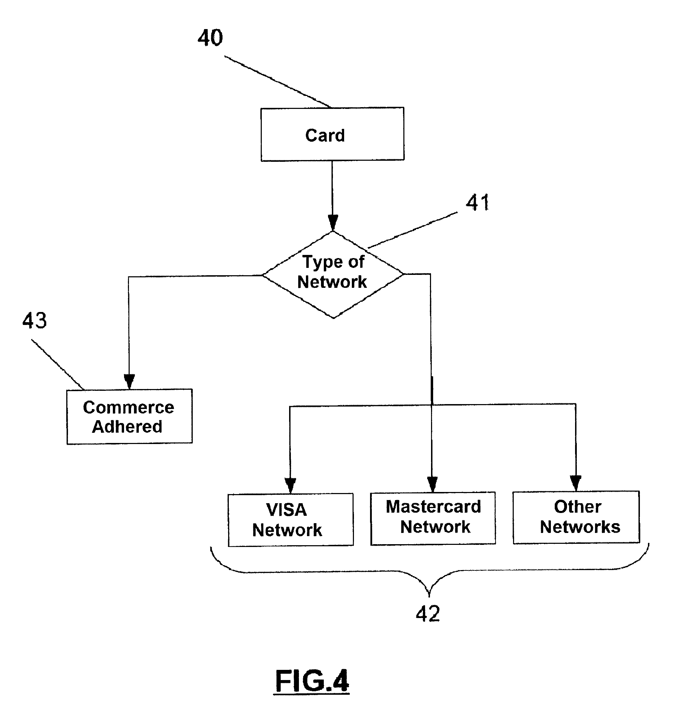

As indicated previously, the multifunction card can be used in open networks or in closed networks, as shown in Fig. 4, wherein depending on the type of network (41), the transaction would correspond to said type of network: open transaction (42) in Visa® or Mastercard® networks and/or closed transaction (43) on private networks with businesses associated to the system.

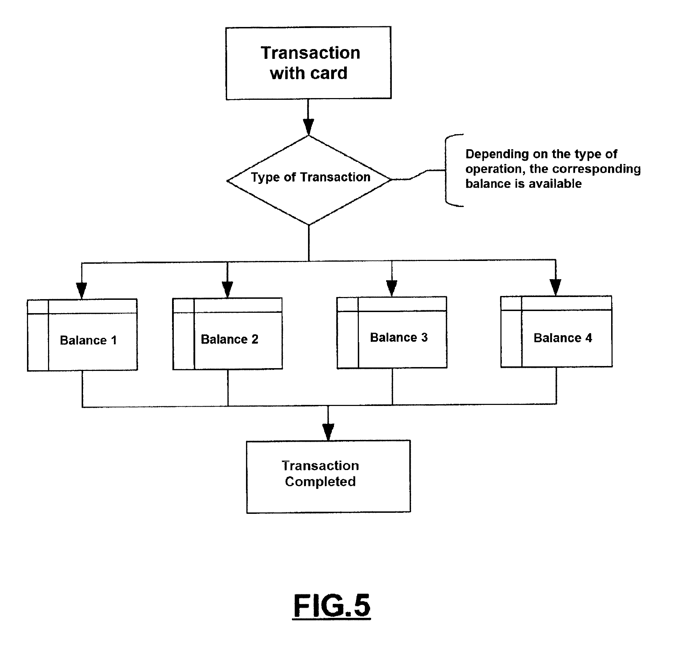

One of the main functions of the system and the multifunction card is its multi-balance capacity, as shown in Fig. 5, wherein depending on the type of transaction (41) to be paid with the card (40), *n* balances are available, having each balance depending on the type of transaction, limiting the card consumptions in sales by multiple parameters, such as amount, date, sector, or any other, existing a system monitoring over the card at each point of sale; in addition, the card and system are configured so that each function or support has assigned a certain balance, that in turn is susceptible to be subdivided, being in turn susceptible to be transferred.

### Example of transaction of the system and card in purchase

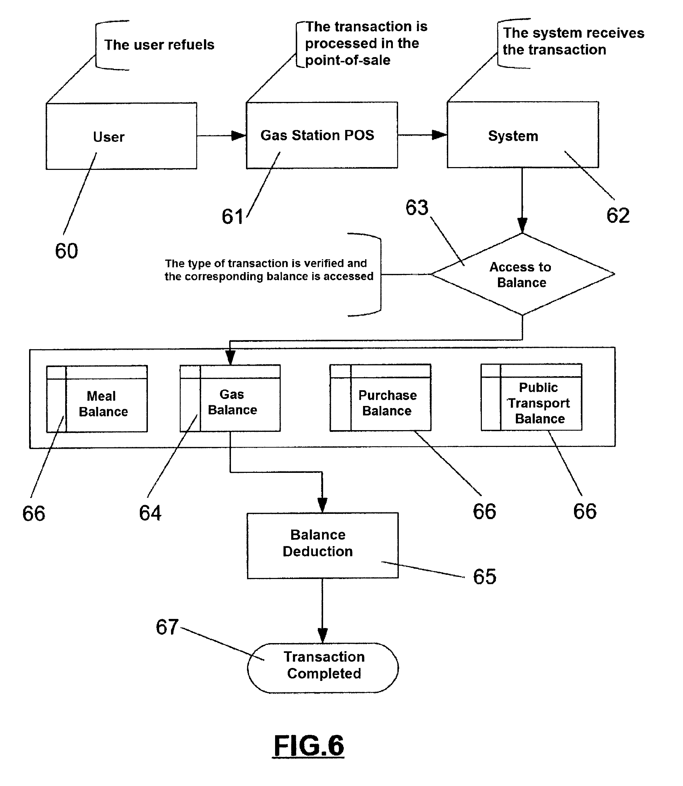

Figure 6 shows an example of a purchase using the payment system and the card described. Thus, the user (60), for example, wants to refuel gas, paying the service in the sale terminal (POS) of said petrol station (61) and accessing the telematic payment system (62), wherein the system database is accessed and the type of transaction is verified, also verifying the balance corresponding to said transaction (if it has some kind of limit, restriction or specific balance for said transaction) (63), and by accessing the balance of gas (64), the amount of said balance (65) is deduced without reducing other balances (66) and ending the transaction (67).

### Exemplary embodiments of the card in a support made of cardboard, paper, paperboard, or the like

The credit card of this particular embodiment comprises at least the user name, card expiry date, sixteen-digit card number as well as a low coercivity magnetic stripe (4) and a CCV identification code on the rear portion, said elements being printed on the card body, and wherein said card body (1) is characterized in that it is entirely formed by a paper with a weight between 200 gr/m² and 240 gr/m² in format of standard credit card with dimensions of 85.60 x 53.98 mm and, in addition, having a plurality of printed security insertions.

In a particular embodiment, the weight is between 212 gr/m² and 228 gr/m², 220 gr/m² being preferred.

Finally, the plurality of security insertions comprise at least security measures selected from:
- orange visible fibers with green response to ultraviolet light;
- blue iridescent stripe with orange response to ultraviolet light;
- holographic foil;
- invisible printing;
- microprinting;
- coded printing.

## Claims

1. Multifunction-type bank card which essentially comprises a card body (1), and which integrates at least magnetic data storage means (4) in the form of a magnetic stripe, the user name, card expiry date, card identification number and a card security code (CCV), and which is **characterized in that**
is configured to integrate at least one function selected from: transport card; membership card for a particular group; presence control applications; applications as payment means, whether as a credit card, a debit card or a closed payment means; and applications as a money card, a gift card or a combination of the above.

2. Card according to claim 1, wherein first radio-frequency means (2) are invisibly integrated, and second electronic data storage means (3) are visibly integrated.

3. Card according to claim 1 **characterized in that** it is entirely formed by a paper with a weight between 200 gr/m² and 240 gr/m² in format of standard credit card with dimensions of 85.60 x 53.98 mm and, in addition, having printed security insertions.

4. Card according to claim 3 **characterized in that** the weight is between 212 gr/m² and 228 gr/m², the preferred weight being 220 gr/m².

5. Card according to claims 3 and 4 **characterized in that** the security insertions comprise at least security measures selected from: orange visible fibers with green response to ultraviolet light; blue iridescent stripe with orange response to ultraviolet light; holographic foil; invisible printing; microprinting and coded printing.

6. Telematic payment system with the multifunction card of claim 1 comprising remote access means to the system, verification means of the type of transaction and control means of the balance of each function of the multifunction card of claim 1 and 2 based on given rules configurable by the user and/or the system administrator, these rules configuring the balances, limits thereof and/or subdivisions of each of these balances **characterized in that** it comprises means of inter-function balance transfer and means of remote recharge of balance in each function of the multifunction card.

7. Telematic payment system of claim 6 **characterized in that** in the inter-function balance transfer, the user accesses (21) access means (22) selected from: the Internet, mobile application, recharging network, or equivalent and requests the inter-function balance transfer (23) to a database of the system (24) wherein the available balance (25) is consulted, denying the transaction if there is not enough balance (26) or approving it and checking the balance to be transferred (27), modifying the internal balances (29) and ending the transaction.

8. Telematic payment system of claim 6 **characterized in that** in the remote balance recharge, the user accesses the balance recharge (31) through an access means to the system (32), that is one selected from: POS, the Internet, mobile application, recharging network, or equivalent; and wherein the system analyzes what type of balance (33) you want to top up, updating each of the balances (34).

9. Telematic payment system of claims 6 to 8 **characterized in that** it is suitable to be used in open networks or in closed networks, wherein depending on the type of network (41), the transaction would correspond to said type of network: open transaction (42) in Visa® or Mastercard® networks and/or closed transaction (43) on private networks with businesses associated to the system.

10. Telematic payment system of claims 6 to 9 **characterized in that** wherein depending on the type of transaction (41) to be paid with the card (40), *n* balances are available, having each balance depending on the type of transaction, limiting the card consumptions in sales by rules or predefined restrictions, such as amount, date, sector, or any other, existing a system monitoring over the card at each point of sale; and where in addition, the card and the system are configured so that each function or support has assigned a certain balance, that in turn is susceptible to be subdivided, each subdivision being in turn susceptible to be transferred.

11. Telematic payment system according to claims 6 to 10 **characterized in that** the multifunction card of claim 1 has a payment image in telematic communication networks assigning a virtual card number that is kept in the database, allowing transactions against the balance on the card defined for such use; and wherein, also has the functionality of enabling or disabling a bag, defined as an amount or balance for purchases on the internet and it can be paid through a remote application, SMS, electronic mail, or the like, while is not in use and activate it only when it is to be used.
